# EUROPÄISCHE PATENTSCHRIFT

(11) **EP 3 893 175 B1**
(45) Veröffentlichungstag und Bekanntmachung des Hinweises auf die Patenterteilung: **11.10.2023**
(21) Anmeldenummer: 21166180.6
(22) Anmeldetag: 31.03.2021
(51) Int. Cl.: G06Q 10/087

(54) **ANORDNUNG FÜR DIE KOMMISSIONIERUNG VON WARENLIEFERUNGEN**
ARRANGEMENT FOR PICKING GOODS
AGENCEMENT POUR LA PRÉPARATION DE COMMANDES DES LIVRAISONS DE MARCHANDISES

(30) Priorität: 06.04.2020 DE 102020109525
(43) Veröffentlichungstag der Anmeldung: 13.10.2021
(73) Patentinhaber: ALFIX GmbH, 09603 Großschirma (DE)
(72) Erfinder: Weiß, Johannes, 09603 Großschirma (DE)
(74) Vertreter: Pöhner, Wilfried Anton

(56) Entgegenhaltungen:
- EP-A1- 1 835 375
- EP-A1- 3 190 552
- DE-U1-202015 009 734
- US-A1- 2016 342 938

## Beschreibung

Vorliegende Erfindung betrifft eine Anordnung zur vereinfachten Kommissionierung von Warenlieferungen in einem Warenlager mit verschiedenen Arten von Waren, insbesondere Gerüstteilen, umfassend eine Datenbank, welche auf einem zentralen oder verteilt ausgestalteten Datenverarbeitungssystem gespeichert ist und verarbeitet wird, ein tragbares Datenverarbeitungsgerät mit einem integrierten Scanner zum Erfassen zum einzelnen, den Waren zugeordneten Markierungen und darauf gespeicherten Informationen sowie Mitteln, um mit der Datenbank in eine Zweiwege-Datenverbindung zu treten sowie Anzeigemitteln um Informationen über die Waren oder aus einer Datenbankanfrage erhaltenen Informationen anzuzeigen.

Bei der Kommissionierung von Waren in einem Warenlager stellt sich das Problem, dass die kommissionierende Person eine Liste der zu kommissionierenden Waren in Form von Einträgen, Warenart, Anzahl abzuarbeiten hat. Das heißt, es sollen Waren einer gegebenen Art in einer vorgegebenen Anzahl aus dem Warenlager entnommen werden. Um das Inventar abzugleichen, ist nach der Kommissionierung in einem zentralen Register die Zahl der entnommenen Waren auszutragen. Ein derartiges Vorgehen betrachtet die einzelnen Waren einer Warenart als vollständig austauschbar, sodass später der gelieferten Ware kein Rückschluss mehr möglich ist, wann eine bestimmte gelieferte Ware beispielsweise hergestellt wurde.

Im früher verwendeten vollständig manuellen Vorgehen wurde die entnommene Anzahl von Waren händisch in der Inventarliste ausgetragen. Gleichfalls musste die abzuarbeitende Kommissionierungsliste, also die Liste mit den für eine bestimmte Lieferung zu kommissionierenden Warenarten und der benötigten Anzahl, während des Kommissionierens händisch aktualisiert werden. Dies ging üblicherweise derart vonstatten, dass auf einem Ausdruck der Kommissionierungsliste die Zahl der bereits kommissionierten Waren als Strichliste oder als Zahl eingetragen wurde. Gleichermaßen wurde von Hand in der Inventarliste des Warenlagers die vorhandenen Anzahlen der betroffenen Warenarten entsprechend der jeweils kommissionierten Zahl von Waren der jeweiligen Arten vermindert.

Hierbei kam es zu einer mehr oder minder großen Verzögerung zwischen der Aktualisierung des Inventars und der Kommissionierung. Es konnte sogar geschehen, dass Warenlieferungen kommissioniert werden sollten, für die gemäß Inventarliste noch eine ausreichende Anzahl an Waren vorhanden war, die jedoch tatsächlich schon anderweitig kommissioniert worden waren. Ein weiterer Nachteil bestand darin, dass die Inventarliste nur intern verfügbar war.

Bekannt ist weiterhin ein halbautomatisches Verfahren, bei dem die Waren individualisiert behandelt werden, indem nach der Herstellung jeder Ware eine Markierung mit Markierungsinformationen zugeordnet, insbesondere aufgeklebt werden. Die Markierungsinformationen sind hierbei insbesondere codiert, etwa als Strich- oder Matrixcode, eingetragen und umfassen zumindest einen Waren-Identifikator, kurz Waren-ID, insbesondere eine Seriennummer der Ware. Die Markierung kann insbesondere in Form eines Etiketts aufgeklebt, werden. Dies macht es möglich, Herstellungsort und Zeit einer Ware nachträglich zu verfolgen. Des Weiteren kann unter dieser Waren-ID in einer Datenbank Informationen zum derzeitigen Aufenthaltsort oder zu einem etwaigen Erwerber der Ware sowie weitere, für diese individuelle Ware relevante Information, wie beispielsweise das Ergebnis einer Qualitätsmessung oder der Gleichen, gespeichert werden.

Die Kommissionierung von Waren und die Verfügbarmachung warenindividueller Informationen in einem solchen System ist noch aufwendiger als in einem klassischen Warenlager der eingangs beschriebenen Art, indem alle Waren einer Art als völlig identisch und austauschbar behandelt werden. Die Kommissionierung und Aktualisierung des Inventars in einem solchen halbautomatischen System kann umfassen: das Einlesen der Markierung per Scanner, der Aktualisierung einer Kommissionierungsliste in Form einer Datei, welche auf dem Scanner oder einem anderen dezentralen Datenverarbeitungsgerät gespeichert ist, das Übertragen dieser Datei auf eine zentral auf einem Server gespeicherte Datenbank, welche eine Inventarliste darstellt, das Übertragen von der Datenbank in einen Onlinespeicher und schließlich das online Verfügbarmachen dieser Informationen über eine entsprechende Onlineschnittstelle.

All diese Datenübertragungsschritte von Kommissionierungsliste über die Datenbank bis zu den online verfügbaren Daten benötigen nach dem Stand der Technik eine manuelle Eintragung der relevanten Daten in der benötigten Form, was einen massiven Zeitaufwand mit sich bringt.

Die veröffentlichte europäische Patentanmeldung EP 1835375 A1 beschreibt ein Verleihmanagementsystem in dem ein mobiles Terminal einen einem Ausleihgegenstand zugeordneten ID Code einlesen und mit einem Server über eine Funkverbindung Daten über den Ausleihstatus austauschen sowie einem Benutzer eine Liste von Ausleihgegenständen einer Reservierung für einen Kunden anzeigen kann.

Die Veröffentlichungsschrift US 2016/034938 A1 schlägt ein Datenverarbeitungssystem für ein Warenhaus umfassend ein tragbares Terminal verbunden mit einem Datenbankserver vor, wobei mit dem tragbaren Terminal Wareninformationen oder Aufbewahrungsortkodes gescannt und Daten bezüglich des Aufbewahrungsorts vom Datenbankserver abgerufen werden können.

Die Gebrauchsmusterschrift DE 20 2015 009 734 U1 offenbart eine Anordnung zum Identifizieren von Gerüstteilen bei der die Gerüstteile mit Markierungsetiketten versehen werden, anhand derer Sie eindeutig zuordenbar sind, wobei die Zuordnunginformationen in einer Datenbank auf einem Server gespeichert werden, und dort mittels eines Kommunikationsgeräts abgerufen werden können.

In der veröffentlichten europäischen Patentanmeldung EP 3190552 A2 wird ein System vorgestellt, welches Kunden in einem Warenhaus beim Auffinden der auf einer Liste aufgeführten Waren unterstützt, indem Markierungssender der Warenbehälter eine ID aussenden anhand der sie durch ein mobiles Gerät des Kunden auffindbar sind. Bei der Annäherung des mobilen Geräts an einen gesuchten Warenbehälter leuchtet an diesem zur besseren Erkennbarkeit ein Licht auf.

Es ist vor diesem Hintergrund die Aufgabe vorliegender Erfindung, eine Anordnung zu finden, welche die Kommissionierung von Waren in einem Warenlager mit durch individuelle Warenidentifikatoren gekennzeichneten Waren vereinfacht und beschleunigt.

Gelöst wird diese Aufgabe durch eine Anordnung gemäß des Anspruches 1.

Ein wesentliches Merkmal ist die Kommunikation eines tragbaren Datenverarbeitungsgerätes mit einem integrierten Markierungserfassungsmittel, beispielsweise einem Scanner oder auch einer Kamera in der Verbindung mit Bildauswertemitteln, zum Einlesen der Markierungsinformationen der Waren in dem Warenlager.

Auf der Datenbank sind eine oder mehrere Listen von zu kommissionierenden Warenlieferungen (Kommissionierungslisten) gespeichert, welche von dem mobilen Datenverarbeitungsgerät abgerufen werden können. Bei der Kommissionierung einer solchen Lieferung kann eine mit dem tragbaren Datenverarbeitungsgerät ausgestattete kommissionierende Person in dem Warenlager die zu kommissionierenden Waren nach und nach abarbeiten. Hierzu werden die Warenmarkierungen eingescannt und hierbei unter anderem die einzigartige Waren-ID sowie die Warenart ausgelesen. Anhand der Warenart wird die Kommissionierungsliste aktualisiert, d.h. die zu kommissionierende Anzahl der Waren der soeben eingelesenen Warenart wird vermindert. Des Weiteren wird die Waren-ID sowie die Warenart der Datenbank mitgeteilt, welche sie aus einer Gesamtinventarliste der verfügbaren Waren austrägt. Gleichzeitig kann die Datenbank die individuelle Ware der Warenlieferung zuordnen, sodass bei einer späteren Überprüfung genau festgestellt werden kann, welches individuelle Teil, identifiziert anhand seiner ID, mit einer bestimmten Lieferung ausgeliefert wurde.

Die Informationen der Datenbank können über eine entsprechende Anwendung auch von einem öffentlichen, nicht lokalen Netzwerk, beispielsweise dem Internet aus, zumindest teilweise einsehbar sein. So kann beispielsweise unter Eingabe einer Waren-ID die Geschichte und derzeitige Aufenthaltsort bzw. der derzeitige Eigentümer eines Teils eingesehen werden. Unter Eingabe einer Warenart kann die verfügbare Anzahl der Waren dieser Art angezeigt werden.

Ein weiterer Vorteil der erfindungsgemäßen Anordnung zur Kommissionierung von Warenlieferung und Verfolgung von Waren besteht darin, dass nach Auslieferung einer Ware durch Einlesen der Warenmarkierung eine eindeutige Zuordnung des Besitzers bzw. Eigentürmers der Ware möglich ist. Verwechslungen oder auch Diebstahl von Waren wird hierdurch vorteilhaft vorgebeugt.

Der wichtigste Vorteil liegt jedoch in der Vereinfachung des Kommissionierungsprozesses selbst. Wohingegen nach dem Stand der Technik bekannten Art eine Warenliste, ob in Papier oder elektronischer Form, manuell abgearbeitet und die bereits kommissionierten Waren händisch ausgetragen werden müssen, wird dies bei der Kommissionierung mithilfe der Anordnung gemäß vorliegender Erfindung vorteilhaft automatisiert, d.h. das Austragen der Ware aus der Liste erfolgt automatisch nach dem Einscannen der Warenmarkierung.

Sobald die noch zu kommissionierende Anzahl einer Ware der gegebenen Warenlieferungen den Wert ,0' erreicht, kann diese Warenart aus der Liste gestrichen und dem Kommissionierer nicht mehr angezeigt werden. Hierdurch wird die Übersichtlichkeit vorteilhaft verbessert.

Erfindungsgemäß ist das Datenverarbeitungsgerät dazu vorbereitet, sofern eine Datenverbindung zu einer Datenbank besteht, beim Erfassen der Markierung einer Ware zwecks der Kommissionierung eine Anfrage an die Datenbank zu senden ob diese Ware noch verfügbar oder bereits kommissioniert ist. Nur im ersten Fall wird die Ware aus der Liste ausgetragen, ansonsten aber dem Kommissionierer ein visueller oder auch audio-visueller Hinweis gegeben, dass die Ware nicht mehr verfügbar ist.

Weiterhin sind erfindungsgemäß die bei einer Datenbankabfrage im Abfragemodus verfügbaren Informationen und Funktionen vom Zugriffsnetz, in welchem das abfragende Gerät angemeldet ist, abhängig. Dabei ist nur bei einem Zugriff aus einem lokalen Netzwerk des die Datenbank ausführenden Datenverarbeitungssystems, beispielsweise eines Servercomputers, ein Vollzugriff inklusive einer Schreibberechtigung zur Änderung der in der Datenbank gespeicherten Daten unter einer individuellen Ware bzw. im Wareninventar erlaubt, während bei Zugriff aus einem nichtlokalen Netz, beispielsweise einem öffentlichen Netz wie dem Internet, kein Vollzugriff, sondern bevorzugt lediglich eine Leseberechtigung vorliegt.

Die Unterscheidung zwischen lokalem und nicht lokalem Netz erfolgt dabei anhand einer Netzwerkadresse des anfragenden Gerätes, insbesondere einer IP-Adresse.

Weitere vorteilhafte Weiterbildung vorliegender Erfindung, welche einzeln oder in Kombination realisierbar sind, sofern sie sich nicht offensichtlich gegenseitig ausschließen, sollen im Folgenden erläutert werden.

Die Markierungen sind bevorzugt auf die Ware geklebte Etiketten, insbesondere Kunststoffetiketten, welche schwer, insbesondere nicht zerstörungsfrei lösbar sind. Dies kann dadurch erreicht werden, dass das Etikett aus einem vergleichsweise fragilen Material, wie beispielsweise dünnem Papier, bevorzugt in einer Stärke zwischen 0,05 und 0,5 mm, besteht und/oder ein starker Klebstoff zur Befestigung auf der Ware verwendet wird.

Die markierten Waren sind insbesondere bevorzugt Gerüstteile. Die Befestigung der Warenmarkierungen findet hierbei an einer Stelle statt, welche beim Einsatz des Teils den geringsten Belastungen ausgesetzt ist, andererseits jedoch auch zum Einscannen der Markierung gut zugänglich ist.

Die zu kommissionierenden Waren können in Gebinden vorliegen, welche mehr als eine Ware einer einzigen Art oder auch mehrerer, verschiedener Arten umfassen. Es wird vorgeschlagen, in einer besonders bevorzugten Ausführungsform des erfindungsgemäßen Kommissioniersystems jedem Gebinde einen eigenen Gebindeidentifikator, kurz Gebinde-ID, sowie eine Gebinde-Markierung zuzuordnen. In der Datenbank sind unter jedem Gebinde die darin enthaltenen individuellen Waren, ggf. unter Angabe der jeweiligen Warenart, eingetragen. Beim Kommissionieren einer Lieferung, welche eine Anzahl von Waren einer bestimmten Art umfasst, welche die in einem Gebinde enthaltene Anzahl an Waren übersteigt, kann statt des individuellen Einlesens aller Markierungen des Gebindes auch die Gebinde-Markierung eingelesen werden. Hierbei werden automatisch alle Waren dieses Gebindes als bereits kommissioniert in der Datenbank markiert und zudem die Zahl der noch zu kommissionierenden Waren lokal auf dem tragbaren Datenverarbeitungsgerät gespeicherten Kommissionierungsliste um die im Gebinde (noch) enthaltene Anzahl an Waren reduziert.

Dies lässt sich gemäß weiter bevorzugter Ausführungsformen der Erfindung auch auf bereits angebrochene Gebinde anwenden, bei dem nicht die volle, übliche Anzahl an Waren enthalten ist, sondern schon ein oder mehr Waren entnommen wurden, sodass nur ein Rest an Waren im Gebinde verbleibt.

Die auf die Markierung geklebten Etiketten enthalten die individuelle Waren-ID sowie eine Information über die Warenart, welche auch in der Waren-ID selbst integriert sein kann, sowie zusätzlich bevorzugt auch eine Zulassungsnummer der vorliegenden Warenart.

Die Vorbereitung des Datenverarbeitungsgeräts für die Funktionalität, insbesondere die Interaktion mit der Datenbank und das Einlesen der Warenmarkierung und das Verarbeiten von Kommissionierungslisten erfolgt bevorzugt durch Aufspielen einer entsprechenden Software.

Das Datenverarbeitungsgerät bzw. die darauf ausgeführte Software verfügen in bevorzugten Ausführungsformen über einen Kommissionierungsmodus, welcher die Kommissionierung von Waren gemäß dem vorbeschriebenen Vorgehen erlaubt, und darüber hinaus über einen Abfragemodus, welcher unabhängig von einer Kommissionierungsliste ist und in dem es beim Einlesen einer Warenmarkierung Informationen zu dieser Ware anzeigt. Hierzu sendet es eine Datenbankabfrage an die Datenbank unter Angabe der eingelesenen Waren-ID und erhält von der Datenbank Informationen über dieses Teil wie beispielsweise Herstellungszeit und Ort, derzeitige Eigentümer bzw. Zuordnung zu einer bereits kommissionierten Warenlieferung.

In besonders bevorzugten Ausführungsformen umfasst die erfindungsgemäße Anordnung ein über ein nicht lokales, bevorzugt öffentliches Netz wie das Internet, angeschlossenes Datenverarbeitungsgerät, auf welchem eine Webapplikation ausgeführt wird, die mit der Datenbank über das nicht lokale Netz interagieren kann. Hierbei ist insbesondere die Möglichkeit eröffnet unter Eingabe einer Waren-ID, je nach Zugriffsrechten, Informationen zu dieser individuellen Ware (authentifizierter Zugriff) oder auch nur zu der Warenart der Ware (nicht-authentifizierter Zugriff) zu erhalten. Die Authentifizierung kann durch Angabe von Credentials gegenüber einem mit der Datenbank interagierenden Benutzersteuerungssystem erfolgen.

Die Software auf dem tragbaren Datenverarbeitungsgerät, die Webapplikation des über ein nicht lokales Netz angeschlossenen Datenverarbeitungsgerätes sowie in manchen Ausführungsformen auch das Benutzersteuerungssystem kommunizieren mit der Datenbank bevorzugt über eine Anwendungsprogrammierschnittstelle, kurz API (Application Programming Interface) welche die Form der zwischen den Anwendungen austauschbaren Daten durch verbindliche Datentypdefinitionen standardisiert.

Für das tragbare Datenverarbeitungsgerät sind insbesondere zwei bevorzugte Ausführungsformen vorgesehen. Die erste ist ein Scanner, also Datenverarbeitungsgerät mit einer integrierten Scannereinheit, insbesondere einer Infrarotscannereinheit, d.h. einer Einheit, welche das Erfassen eines Codes, beispielsweise eines Strichcodes oder auch eines 2D-Matrixcodes, ermöglicht, wobei die hierfür nötigen optischen Erfassungsmittel und die zur Analyse der erfassten Daten erforderlichen Datenverarbeitungsmittel, einschließlich Software, in einer dedizierten, abgeschlossenen Einheit verbindet, welche als Ausgabe die aus dem Code extrahierte Information liefert.

Des Weiteren ist eine zweite Ausführungsform vorgesehen, in der das Datenverarbeitungsgerät ein handelsübliches Smartphone oder ein Tablet oder ähnliches Gerät mit einer integrierten optischen Kamera ist, wobei auf dem Datenverarbeitungsgerät eine Bildauswertungssoftware ausgeführt wird, welche mit der Kamera erfasste Bilder analysiert und eine Strich- oder 2D-Matrixcode-Erkennung ausführt.

Die erste Ausführungsform ist bei der Erfassung von Markierungen wesentlich schneller als die zweite und kann, sofern eine Scannereinheit mit einer Infrarotkamera eingesetzt wird, insbesondere auch in schlechten Lichtverhältnissen zuverlässig Warenmarkierungen einlesen. Deswegen erfolgt die Kommissionierung von Warenlieferungen bevorzugt mit mobilen Datenverarbeitungsgeräten der ersten beschriebenen Ausführungsform. Sie ist jedoch auch mit einem mobilen Datenverarbeitungsgerät in der zweiten Ausführungsform möglich. Letztere werden insbesondere für die Umsetzung des Abfragemodus vorgeschlagen.

Ob bei einer Abfrage der volle Datensatz oder nur ein Teil eines Datensatzes zu einer Ware ausgelesen werden kann, kann entweder ebenfalls anhand des Zugriffsnetzes oder anhand zusätzlicher Kriterien, wie etwa einer zuvor erfolgten Authentifizierung gegenüber einem Benutzersteuerungssystem entschieden werden. Nach dem Einloggen in einen Account des Benutzersteuerungssystems mit den entsprechenden Berechtigungen kann etwa die gesamte unter einer Waren-ID gespeicherte Information angezeigt werden.

Weitere Einzelheiten, Merkmale und Vorteile vorliegender Erfindung ergeben sich aus den anhand der Figuren nachfolgend näher beschriebenen Ausführungsbeispielen. Diese sollen vorliegende Erfindung lediglich illustrieren und in keiner Weise in ihrer Allgemeinheit einschränken.

Es zeigen:
- Figur 1:: Eine schematische Übersicht über eine Ausführungsform der erfindungsgemäßen Anordnung.
- Figur 2:: Ansichten eines tragbaren Datenverarbeitungsgeräts mit einer Scannereinheit.
- Figur 3:: Ein Beispiel eines zur Warenmarkierung verwendeten Etiketts.
- Figur 4:: Ein Beispiel einer Warenkommissionierungsliste.
- Figur 5:: Eine schematische Übersicht der weiteren Infrastruktur, in welche das erfindungsgemäße Warenkommissioniersystem eingebunden ist.

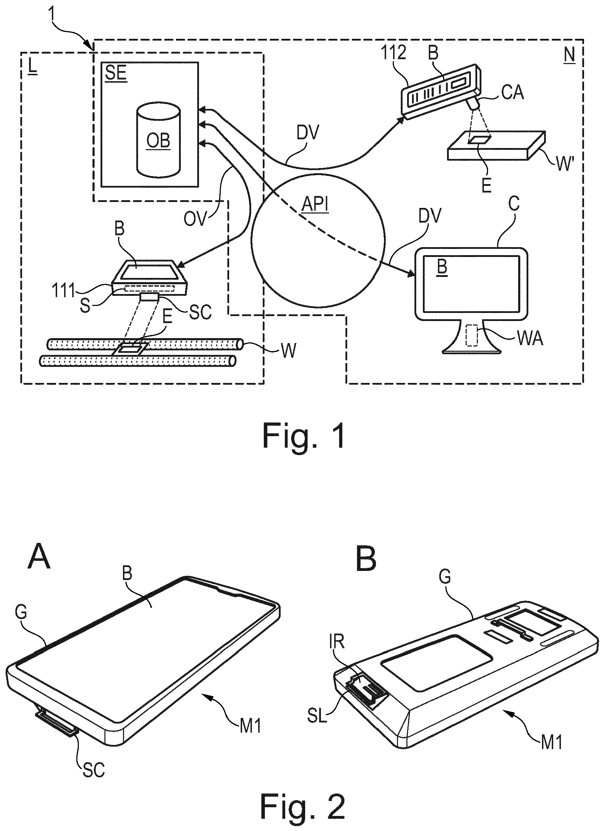

In **Figur 1** ist eine schematische Übersicht einer einfachen Ausführungsform der erfindungsgemäßen Kommissionieranordnung gezeigt.

Hardwareseitig umfasst sie das Datenverarbeitungssystem SE ein tragbares Datenverarbeitungsgerät M1 mit einer Scannereinheit SC, ein tragbares Datenverarbeitungsgerät M2 mit einer Kamera CA sowie ein Datenverarbeitungsgerät C. Datenverarbeitungsgerät M1 und das Datenverarbeitungssystem SE kommunizieren über Datenverbindung DV in einem lokalen Datennetz L, wohingegen die Datenverbindung DV mit den Datenverarbeitungsgeräten M2 und C über ein nicht-lokales Netz N erfolgt.

Auf dem Datenverarbeitungssystem SE wird die Datenbank DB gespeichert, welche eine Inventarliste des Warenlagers mit Informationen über alle derzeit im Lager verfügbaren Waren mit ihren individuellen Waren-IDs und darüber hinaus auch über alle jemals in dem System erfassten Waren, auch wenn diese bereits verkauft und ausgeliefert worden sind. Darüber hinaus enthält die Datenbank eingegangenen Bestellungen entsprechende Warenkommissionierungslisten, welche einen oder mehrere Einträge der Form (Warenart, Anzahl) umfassen und einem Besteller und/oder Empfänger zugeordnet sind, wobei Besteller und Empfänger identisch oder verschieden sein können.

Softwareseitig sind die auf dem Datenverarbeitungssystem SE ausgeführte Datenbank DB, die auf den tragbaren Datenverarbeitungsgeräten ausgeführte Software S sowie die auf dem stationären Datenverarbeitungsgerät C ausgeführte Web-Applikation W vorhanden.

Eine zentrale Rolle kommt der Anwendungsprogrammschnittstelle API zu, welche die zwischen den Softwarekomponenten des erfindungsgemäßen Kommissioniersystems ablaufende Datenkommunikation standardisiert und somit die leichte Einbindung neuer Komponenten ermöglicht.

Beim Kommissionieren wird bevorzugt das tragbare Datenverarbeitungsgerät M1 eingesetzt, dessen dedizierte Scannereinheit SC ein schnelles einscannen der Markierungsetiketten E der Waren W, hier Gerüstteile, auch unter widrigen Bedingungen, wie aus schrägen Winkeln oder unter schlechten Lichtverhältnissen erlaubt. Eine abzuarbeitende Kommissionierungsliste kann von der Datenbank DB auf das Datenverarbeitungsgerät M1 geladen und dort auf dem Display B angezeigt werden. Beim Einscannen der Markierung E einer Ware W wird die Warenart erkannt und in dem Eintrag der Warenart in der Kommissionierungsliste, sofern vorhanden, um eins vermindert.

Es ist als Teil der Erfindung auch angedacht, Gebinde mit mehreren Waren auf einmal einzulesen, und zwar entweder indem eine Gebinde-ID eingelesen wird, wobei diese als solche erkannt wird und der Eintrag der Kommissionierungsliste zu dieser Warenart, sofern vorhanden, um die noch in dem Gebinde vorhandene Anzahl an Waren reduziert wird, wobei diese Restanzahl anhand einer Abfrage der Datenbank ermittelt wird.

Nach dem Einscannen einer Ware wird in jedem Fall eine Datenbankabfrage durchgeführt, um zu ermitteln, ob diese individuelle Ware bereits kommissioniert ist. Nur sofern dies nicht der Fall ist, wird eine entsprechende Aktualisierung der Kommissionierungsliste vorgenommen, ansonsten wird der kommissionierenden Person über ein Audiosignal und eine Anzeige auf dem Display B eine entsprechende Rückmeldung gegeben, dass die Ware nicht mehr verfügbar ist.

Sobald die nötige Anzahl von Waren einer Warenart kommissioniert ist, wird der entsprechende Eintrag der Warenliste entfernt, um die Listenanzeige so übersichtlich wie möglich zu halten und eine einfache Rückmeldung zu geben, wann die Kommissionierung abgeschlossen ist: nämlich dann, wenn nur noch eine leere Liste angezeigt wird.

Ist eine gescannte Warenart nicht (mehr) auf der Kommissionierungsliste vorhanden, wird entweder keine Handlung unternommen, oder es wird temporär in den Abfragemodus gewechselt.

Das zweite tragbare Datenverarbeitungsgerät M2 wird bevorzugt im Abfragemodus eingesetzt, also um Informationen über ein bestimmtes, individuelle Ware, hier Gerüstteil W`, aus der Datenbank abzufragen und darüber etwa Aufschluss über den Eigentümer oder geplanten Standort des Teils T zu erhalten. Hierzu wird die Markierung M des Teils T mit der Kamera CA des Geräts M2 erfasst und durch Bildverarbeitung die Waren-ID des Teils T ermittelt und über das Netzwerk N an die Datenbank gesendet, welche die unter dieser Waren-ID zu diesem Teil T verfügbaren Informationen an das Gerät M2 zurücksendet.

Über die auf dem stationären Computer C ausgeführte Web-Applikation WA können aus der Datenbank unter Eingabe einer konkreten Waren-ID Informationen über diese Ware oder auch nur zur der Warenart, wie beispielsweise Zulassungsnummer, Gewicht, Abmessungen oder dergleichen, abgefragt werden.

Über die nicht-lokale Datenverbindung DV mit dem Datenverarbeitungssystem SE und der darauf ausgeführten Datenbank DB kommunizierenden Datenverarbeitungsgeräte M2 und C ist jedoch kein Schreibzugriff auf die Datenbank möglich.

Die **Figuren 2 - 4** zeigen Ausführungsformen einzelner Elemente des Kommissionierungssystems vorliegender Erfindung.

In **Figur 2** ist ein mobiles Datenverarbeitungsgerät mit einer integrierten Scannereinheit gemäß einer bevorzugten Ausführungsform der Erfindung in verschiedenen Ansichten dargestellt.

Teilfigur A zeigt eine perspektivisch überhöhte Vorderansicht des Datenverarbeitungsgeräts M1, in welcher an einer vorderen Stirnseite des Gehäuses G die optischen Erfassungsmittel IR der Scannereinheit SC sowie das Display B zu erkennen sind. Teilfigur B zeigt eine perspektivische Unteransicht, welche ebenfalls die optischen Erfassungsmittel IR an der vorderen Stirnseite des Gehäuses G erkennen lässt.

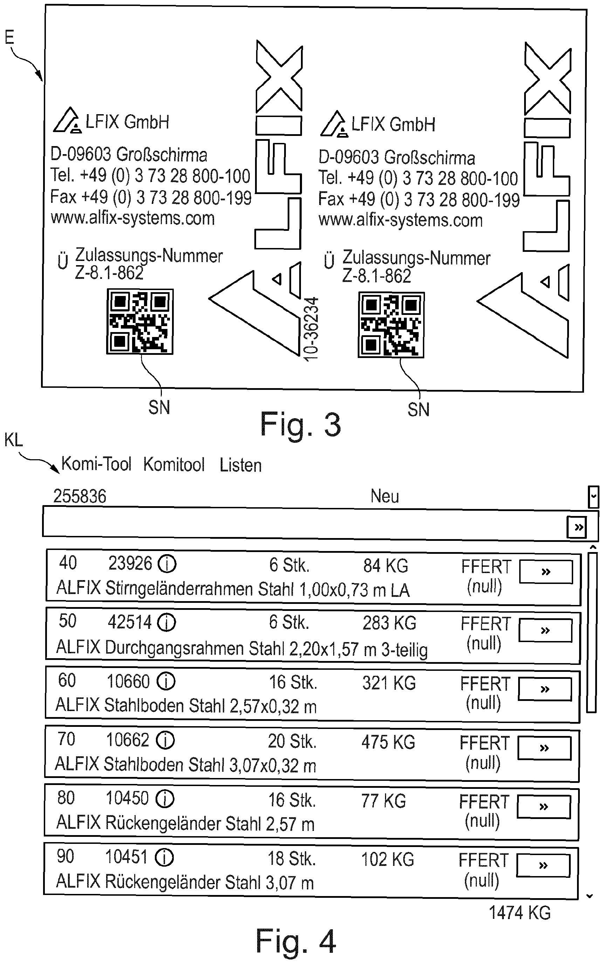

**Figur 3** zeigt ein Beispiel einer bevorzugten Warenmarkierung, in Form eines für Gerüstteile vorgesehenen Markierungsetiketts E. Neben nicht-codierten Informationen über Teilehersteller und der Zulassungsnummer des Gerüstteils, ist als wesentliche erfindungsgemäße Information die Waren-ID SN in codierter Form als QR-Code aufgedruckt.

In **Figur 4** ist eine beispielhafte Kommissionierungsliste gezeigt, wie sie auf dem Anzeigemittel des tragbaren Geräts während des Kommissionierens angezeigt wird.

Außer der Teilenummer, welche die Warenart wiedergibt, und der zu kommissionierenden Anzahl, sind auch Informationen über Gewicht des Postens sowie Informationen zu den Abmessungen vorhanden. Beides erleichtert der kommissionierenden Person das sich an die Kommissionierung üblicherweise anschließende Verladen der Lieferung besser zu vorauszuplanen. Beispielsweise können bei zusätzlicher Angabe eines verwendeten Transportfahrzeugs überwacht werden, ob dessen Zuladung oder auch der vorhandene Laderaum überschritten werden.

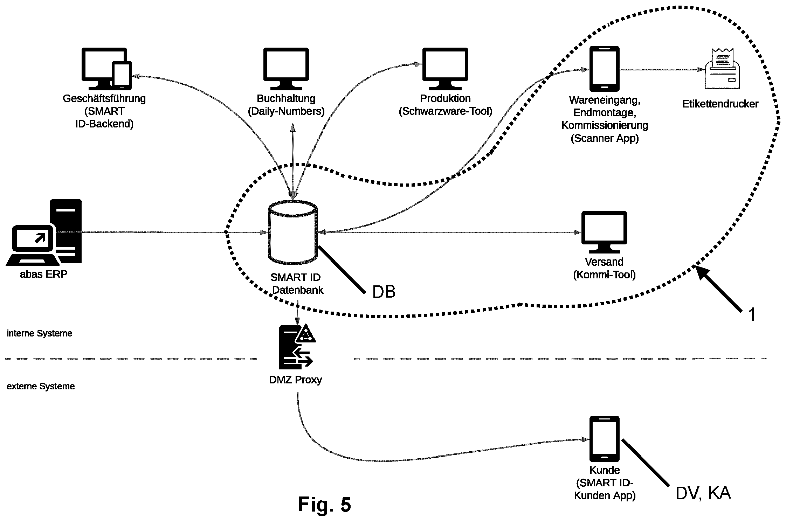

**Figur 5** zeigt eine schematische Übersicht weiterer Infrastruktur, in welche das Kommissioniersystem vorliegender Erfindung als ein Teilaspekt eingebunden ist.

Weitere interne Komponenten neben dem erfindungsgemäßen Kommissionierungssystems 1, welches eine Datenbank DB, ein Kommi-Tool und eine mit einem Etikettendrucker kommunizierende Scanner-App umfasst, sind Anwendungen, welche einen Zugang zur Datenbank DB für die Produktion ("Schwarzware-Tool"), die Buchhaltung ("Daily-Numbers") und die Geschäftsführung ("Smart-ID Backend") bereitstellen.

Eine weitere externe Komponente ist eine Kunden-Applikation, welche auf einem Datenverarbeitungsgerät eines Kunden ausgeführt wird. Ein DMZ Proxy bildet die Schnittstelle zwischen internen und externen Komponenten, Die anderen Komponenten der Infrastruktur greifen auf die Datenbank DB des Kommisionierungssystems 1 zu, in welcher die Einträge zu den im Lager vorhandenen Teilen, den zu kommissionierenden Lieferungen und den Kunden und Einsatzorten gespeichert ist.

### Bezugszeichenliste

- 1: Komm issionierungsanordnung

- SE: Datenverarbeitungssystem, Server
- M1, M2: tragbare Datenverarbeitungsgeräte
- SC: Scannereinheit
- IR: Erfassungsmittel
- CA: Kamera
- C: Computer
- B: Display von M1, M2, C
- W: Ware, Gerüstteil
- E: Markierungsetikett
- SN: Warenidentifikator (codiert)

- DB: Datenbank
- S: Kommissionier- und Abfragesoftware
- API: Anwendungsprogrammierschnittstelle
- WA: Web-Applikation
- KL: Kommissionierungsliste
- DV: Datenverarbeitungsgerät
- KA: Kunden-Applikation

- L: lokales Netzwerk
- N: nicht-lokales Netzwerk
- DV: Datenverbindung

## Patentansprüche

1. Anordnung für die vereinfachte Kommissionierung von Warenlieferungen in einem Warenlager mit Waren verschiedener Warenarten, insbesondere Gerüstteile, umfassend
- eine Datenbank (DB) welche auf einem zentralen oder dezentralen Datenverarbeitungssystem (SE) gespeichert und ausgeführt ist,
- ein tragbares Datenverarbeitungsgerät (M1, M2) mit
∘ einem integrierten Lesemittel (SC, CA) zum Auslesen von Informationen aus den einzelnen Waren (W) zugeordneten Markierungen (E), wobei diese Informationen zumindest einen eindeutigen Identifikator der Ware (W) umfassen, und
∘ Mitteln, um mit der Datenbank (DB) auf dem Datenverarbeitungssystem (SE) in Interaktion zu treten, um eine, bevorzugt drahtlose, Datenverbindung (DV) aufzubauen und Daten aus der Datenbank (DB) abzurufen oder an diese zu senden, und
∘ Anzeigemitteln um einen Benutzer des Datenverarbeitungsgeräts (M1, M2) Informationen anzuzeigen, wobei
- eine zu kommissionierende Warenlieferung als eine Liste (KL) von Waren mit einem oder mehreren Einträgen umfassend eine Warenart und eine Anzahl zu kommissionierender Waren dieser Warenart in der Datenbank (DB) gespeichert ist, und
- das tragbare Datenverarbeitungsgerät (M1, M2) dazu vorbereitet ist:
∘ eine der Warenlisten (KL) einer zu kommissionierenden Warenlieferung von der Datenbank (DB) abzurufen und auf den Anzeigemitteln so darzustellen, dass zu jedem Zeitpunkt erkenntlich ist, welche und wie viele der Waren der einzelnen Warenarten der Warenliste (KL) noch nicht kommissioniert sind, und
∘ den Identifikator der erfassten Ware (W) der Datenbank (DB) mitzuteilen,
∘ eine Rückmeldung zu geben, insbesondere mittels eines auf dem Anzeigemittel dargestellten visuellen Hinweises, dass die erfasste Ware (W) bereits kommissioniert ist,
- wobei die Datenbank (DB) dazu vorbereitet ist, die erfasste Ware (W) als kommissioniert zu kennzeichnen und aus einer Liste der verfügbaren Waren auszutragen, und
- wobei das Datenverarbeitungsgerät (M1, M2) dazu vorbereitet ist, sofern eine Datenverbindung zur Datenbank (DB) besteht, beim Erfassen der Markierung einer Ware (W) zwecks deren Kommissionierung eine Anfrage an die Datenbank (DB) zu senden, ob diese Ware (W) noch verfügbar oder bereits kommissioniert ist und nur im ersten Fall die Ware aus der Warenliste austrägt und die entsprechend aktualisierte Warenliste anzeigt,
**dadurch gekennzeichnet,**
- **dass** das Datenverarbeitungsgerät (M1, M2) weiterhin dazu vorbereitet ist, beim Erfassen der Markierung (M) einer Ware (W) einer Warenlieferung in dem Warenlager die angezeigte Anzahl von noch zu kommissionierenden Waren dieser Warenart um eins bzw. die erfasste Anzahl der markierten Waren dieser Art zu vermindern, sofern sich diese Warenart auf der Warenliste findet, und
- **dass** die bei einer Abfrage der Datenbank (DB) verfügbaren Funktionen und Informationen von einem Zugriffsnetz des abfragenden Datenverarbeitungsgeräts (M1, M2, C) abhängig sind, wobei bei einem Zugriff auf die Datenbank (DB) zur Abfrage von Informationen zu einer Ware (W)
∘ aus einem lokalen Netzwerk (L) ein Vollzugriff auf die Datenbank (DB) inklusive eines Schreibzugriffes möglich ist, und
∘ aus einem nicht-lokalen Netzwerk (N), zum Beispiel dem Internet, kein Vollzugriff, insbesondere nur ein Lesezugriff, bevorzugt nur ein Lesezugriff auf einen Teil der Daten zu der Ware (W) verfügbar ist,
∘ wobei die Unterscheidung zwischen dem lokalen Netzwerk (L) und dem nicht lokalen Netzwerk (N) anhand einer Netzwerkadresse des anfragenden Gerätes (M1, M2, C) in dem Zugriff netzwerk erfolgt.

2. Anordnung nach Anspruch 1, **dadurch gekennzeichnet,**
**dass** die Markierung auf der Ware (W) ein aufgeklebtes Etikett (E) ist, auf dem als eindeutiger Identifikator eine Seriennummer (SN) der Ware (W) und weiterhin insbesondere eine Zulassungsnummer, bevorzugt in codierter, optisch lesbarer Form, trägt.

3. Anordnung nach einem der vorhergehenden Ansprüche,
**dadurch gekennzeichnet, dass** die Mittel zur Vorbereitung des Datenverarbeitungsgeräts (M1, M2) zur Interaktion mit der Datenbank (DB) eine auf dem Datenverarbeitungsgerät (M1, M2) ausgeführte Software umfassen.

4. Anordnung nach Anspruch 3, **dadurch gekennzeichnet,**
**dass** die Datenbank (DB) und die auf dem Datenverarbeitungsgerät (M1, M2) ausgeführte Software über eine Anwendungsprogrammierschnittstelle (API) interagieren, welche Datentypdefinitionen für die über die Datenverbindung (DV) zwischen Datenverarbeitungsgerät (M1, M2) und Datenbank (DB) austauschbaren Daten umfasst.

5. Anordnung nach einem der vorhergehenden Ansprüche, **dadurch gekennzeichnet, dass** das Datenverarbeitungsgerät (M1, M2) dazu vorbereitet ist, in einem Auslesemodus nach dem Einlesen der Markierungsinformationen einer Markierung (E) einer Ware (W) Informationen zu dieser Ware anzuzeigen, welche insbesondere von der Datenbank (DB) auf eine Datenbankabfrage durch das Datenverarbeitungsgerät (M1, M2) hin an dieses übermittelt wurden.

6. Anordnung nach einem der vorhergehenden Ansprüche, **dadurch gekennzeichnet, dass** sie ein weiteres Datenverarbeitungsgerät (C) umfasst, welches über ein öffentliches Netzwerk (N), insbesondere das Internet, mit der dem Datenverarbeitungssystem (SE) kommuniziert und auf dem eine Webapplikation (WA) ausgeführt wird, welche den Zugriff auf die Datenbank (DB) ermöglicht, wobei mittels der Webapplikation unter Eingabe eines Identifikators einer Ware Informationen zu der Ware oder zumindest der Warenart der Ware abrufbar sind.

7. Anordnung nach Anspruch 6, **dadurch gekennzeichnet, dass** die Webapplikation (WA) auf dem weiteren Datenverarbeitungsgerät (C) mit der Datenbank (DB) über die Anwendungs-Programmierschnittstelle (API) interagiert.

8. Anordnung nach einem der vorhergehenden Ansprüche, **dadurch gekennzeichnet, dass** das Lesemittel (SC, CA) des Datenverarbeitungsgeräts (M1, M2):
- einen Scanner, insbesondere einen Infrarot-Scanner (SC), oder
- eine optische Kamera (CA) des Datenverarbeitungsgeräts (M2) in Verbindung mit einer auf dem Datenverarbeitungsgerät (M2) ausgeführten Bildauswertungssoftware ist.

9. Anordnung nach Anspruch 1, **dadurch gekennzeichnet, dass** die Unterscheidung zwischen dem lokalen Netzwerk (L) und dem nicht lokalen Netzwerk (N) anhand einer IP-Adresse erfolgt.

10. Anordnung nach einem der vorhergehenden Ansprüche, **dadurch gekennzeichnet, dass** bei der Abarbeitung einer Warenliste (KL) während der Kommissionierung die Anzeige der noch zu kommissionierenden Waren auf dem tragbaren Datenverarbeitungsgerät (M1, M2) derart erfolgt, dass eine Warenart nicht mehr angezeigt wird, sobald die noch zu kommissionierende Anzahl dieser Warenart den Wert ,0' erreicht.

11. Anordnung nach einem der vorhergehenden Ansprüche, **dadurch gekennzeichnet, dass** eine Erfassung von Warengebinden umfassend mehrere Waren einer oder verschiedener Warenarten möglich ist, wobei jedem Warengebinde ein eindeutiger Gebindeidentifikator zugeordnet ist, welcher auf einer Gebindemarkierung aufgebracht ist, wobei die Gebindemarkierung auf einer Verpackung des Gebindes aufgebracht ist, und insbesondere in Form eines optisch lesbaren Etikett, bevorzugt in codierter Form vorliegt.

## Claims

1. Arrangement for the simplified picking of deliveries of goods in a warehouse with goods of different types, in particular scaffolding parts, comprising
- a database (DB) which is stored and executed on a central or decentralized data processing system (SE),
- a portable data processing device (M1, M2) with
o an integrated reading means (SC, CA) for reading out information from markings (E) assigned to the individual goods (W), this information comprising at least one unique identifier of the goods (W), and
o means to interact with the database (DB) on the data processing system (SE) in order to set up a data connection (DV), preferably wireless, and to retrieve data from the database (DB) or to send data to it, and
∘ display means to display information to a user of the data processing device (M1, M2),
where
- a delivery of goods to be picked is stored in the database (DB) as a list (KL) of goods with one or more entries comprising a type of goods and a number of goods to be picked of this type of goods, and
- the portable data processing device (M1, M2) is prepared to:
∘ retrieve one of the goods lists (KL) of a goods delivery to be picked from the database (DB) and display it on the display means in such a way that it can be seen at any time which and how many of the goods of the individual goods types on the goods list ( KL) have not been picked yet, and
∘ to inform the database (DB) of the identifier of the recorded goods (W),
∘ to give feedback, in particular by means of a visual indication shown on the display means, that the recorded goods (W) have already been picked,
- wherein the database (DB) is prepared to mark the recorded goods (W) as picked and to remove them from a list of available goods, and
- wherein the data processing device (M1, M2) is prepared, if there is a data connection to the database (DB) and when detecting the marking of a product (W) for the purpose of picking it, to send an inquiry to the database (DB) as to whether this good (W) is still available or have already been picked and only in the first case removes the good from the list of goods and displays the correspondingly updated list of goods,
**characterized**
- **in that** the data processing device (M1, M2), when detecting the marking (M) of a product (W) of a product delivery in the warehouse, is also prepared to decrement the displayed number of products of this product type that are still to be picked by one or the recorded number of the marked goods of this type, provided that this type of goods is on the list of goods, and
- **in that** the functions and information available when querying the database (DB) depend on an access network of the querying data processing device (M1, M2, C), wherein, when the database (DB) query about a product (W) occurs
∘ from a local network (L), full access to the database (DB) including write access is possible, and
∘ from a non-local network (N), for example the internet, no full access, in particular only read access, preferably only read access to part of the data on the goods (W) is available,
∘ wherein the distinction between the local network (L) and the non-local network (N) is based on a network address of the requesting device (M1, M2, C) in the access network.

2. Arrangement according to claim 1, **characterized in that** the marking on the goods (W) is an affixed label (E) which carries a serial number (SN) of the goods (W) and furthermore in particular an approval number preferably in coded, optically readable form.

3. Arrangement according to one of the preceding claims, **characterized in that** the means for preparing the data processing device (M1, M2) for interaction with the database (DB) comprise a software running on the data processing device (M1, M2).

4. Arrangement according to claim 3, **characterized in that** the database (DB) and the software running on the data processing device (M1, M2) interact via an application programming interface (API) which contains data type definitions for the data exchangable via the data connection (DV) between the data processing device (M1, M2) and the database (DB).

5. Arrangement according to one of the preceding claims, **characterized in that** the data processing device (M1, M2) is prepared to, in a readout mode after reading in the marking information of a marking (E) of a product (W), display information about this product which, in particular, were transmitted to the data processing device (M1, M2) from the database (DB) in response to a database query.

6. Arrangement according to one of the preceding claims, **characterized in that** it comprises a further data processing device (C) which communicates via a public network (N), in particular the Internet, with the data processing system (SE) and on which a web application (WA) is executed, which enables access to the database (DB), whereby information about the goods or at least the type of goods can be called up by means of the web application by entering an identifier for a goods.

7. Arrangement according to claim 6, **characterized in that** the web application (WA) on the further data processing device (C) interacts with the database (DB) via the application programming interface (API).

8. Arrangement according to one of the preceding claims, **characterized in that** the reading means (SC, CA) of the data processing device (M1, M2) is:
- a scanner, in particular an infrared scanner (SC), or
- an optical camera (CA) of the data processing device (M2) in connection with image analysis software running on the data processing device (M2).

9. Arrangement according to claim 1, **characterized in that** the distinction between the local network (L) and the non-local network (N) is based on an IP address.

10. Arrangement according to one of the preceding claims, **characterized in that**, when processing a list of goods (KL) during picking, the display of the goods still to be picked on the portable data processing device (M1, M2) takes place in such a way that a type of goods is no longer displayed as soon as the number of this type of goods still to be picked reaches the value '0'.

11. Arrangement according to one of the preceding claims, **characterized in that** a detection of goods containers comprising several goods of one or different types of goods is possible, each goods container being assigned a unique container identifier, which is applied to a container marking, wherein the container marking is applied to a packaging of the container, and is present in particular in the form of an optically readable label, preferably in coded form.

## Revendications

1. Agencement pour la préparation simplifiée de livraisons de marchandises dans un entrepôt contenant des marchandises de différents types, en particulier des pièces d'échafaudage, comprenand
- une base de données (DB) qui est stockée et exécutée sur un système de traitement de données (SE) central ou décentralisé,
- un appareil portable de traitement de données (M1, M2) avec
∘ un moyen de lecture intégré (SC, CA) pour lire des informations à partir de marquages (E) attribués aux marchandises individuelles (W), ces informations comprenant au moins un identifiant unique des marchandises (W), et
∘ des moyens pour interagir avec la base de données (DB) sur le système de traitement de données (SE) afin d'établir une connexion de données (DV), de préférence sans fil, et de récupérer des données dans la base de données (DB) ou de les lui envoyer, et
∘ des moyens d'affichage pour afficher des informations à un utilisateur du dispositif de traitement de données (M1, M2),
où
- une livraison de marchandises à prélever est stockée dans la base de données (DB) sous forme d'une liste (KL) de marchandises avec une ou plusieurs entrées comprenant un type de marchandise et un certain nombre de marchandises à prélever de ce type de marchandise, et
- le dispositif portable de traitement de données (M1, M2) est préparé à cet effet :
∘ récupérer dans la base de données (DB) l'une des listes de marchandises (KL) d'une livraison de marchandises à prélever et l'afficher sur le moyen d'affichage de manière à pouvoir voir à tout moment quelles et combien de marchandises de les différents types de marchandises figurant sur la liste de marchandises ( KL) ne sont pas encore prélevées, et
∘ de renseigner la base de données (DB) de l'identifiant de la marchandise enregistrée (W),
∘ indiquer, notamment au moyen d'une indication visuelle sur les moyens d'affichage, que les marchandises enregistrées (W) ont déjà été prélevées,
- dans lequel la base de données (DB) est préparée pour marquer les marchandises enregistrées (W) comme prélevé et pour les supprimer d'une liste de marchandises disponibles, et
- dans lequel le dispositif de traitement de données (M1, M2) est préparé, s'il existe une connexion de données à la base de données (DB), lors de la détection du marquage d'un produit (W) dans le but de le prélever, à envoyer une demande au base de données (DB) indiquant si ces marchandises (W) sont encore disponibles ou ont déjà été prélevées et, seulement dans le premier cas, supprime les marchandises de la liste des marchandises et affiche la liste des marchandises mise à jour en conséquence,
**caractérisé en ce**
- **que** le dispositif de traitement de données (M1, M2) est également préparé à décrémenter, lors de la détection du marquage (M) d'un produit (W) d'une livraison de produit dans l'entrepôt, le nombre affiché de produits de ce type de produit qui restent à être prélevé par un ou le numéro enregistré des marchandises marquées de ce type, à condition que ce type de marchandises figure sur la liste des marchandises, et
- **que** les fonctions et informations disponibles lors de l'interrogation de la base de données (DB) dépendent d'un réseau d'accès du dispositif de traitement de données interrogeur (M1, M2, C), avec accès à la base de données (DB) pour interroger des informations sur un produit (W)
∘ L'accès complet à la base de données (DB), y compris l'accès en écriture, est possible à partir d'un réseau local (L), et
∘ à partir d'un réseau non local (N), par exemple Internet, aucun accès complet, notamment uniquement un accès en lecture, de préférence seul un accès en lecture à une partie des données sur le produit (W), n'est disponible,
∘ dans lequel la distinction entre le réseau local (L) et le réseau non local (N) est basée sur une adresse réseau du dispositif demandeur (M1, M2, C) dans le réseau d'accès.

2. Agencement selon la revendication 1, **caractérisé en ce que** le marquage sur la marchandise (W) est une étiquette collée (E) sur laquelle figure un numéro de série (SN) de la marchandise (W) et, notamment, un numéro de série (SN) comme identifiant unique numéro d'homologation, de préférence sous forme codée et lisible optiquement.

3. Agencement selon l'une des revendications précédentes, **caractérisé en ce que** les moyens pour préparer le dispositif de traitement de données (M1, M2) à l'interaction avec la base de données (DB) comprennent un logiciel s'exécutant sur le dispositif de traitement de données (M1, M2).

4. Agencement selon la revendication 3, **caractérisé en ce que** la base de données (DB) et le logiciel exécuté sur le dispositif de traitement de données (M1, M2) interagissent via une interface de programmation d'application (API) qui contient des définitions de types de données. pour les données échangeables via la connexion de données (DV) entre le dispositif de traitement de données (M1, M2) et la base de données (DB).

5. Agencement selon l'une des revendications précédentes, **caractérisé en ce que** le dispositif de traitement de données (M1, M2) est préparé pour, dans un mode lecture après lecture des informations de marquage d'un marquage (E) d'un produit (W), afficher des informations sur ce produit qui, en particulier, ont été transmises au dispositif de traitement de données (M1, M2) à partir de la base de données (DB) en réponse à une requête de la base de données.

6. Agencement selon l'une des revendications précédentes, **caractérisé en ce qu'**il comprend un autre dispositif de traitement de données (C) qui communique via un réseau public (N), notamment l'Internet, avec le système de traitement de données (SE) et sur lequel une application Web (WA) est exécutée, qui permet d'accéder à la base de données (DB), grâce à laquelle des informations sur les marchandises ou au moins sur le type de marchandises peuvent être consultées au moyen de l'application Web en saisissant un identifiant pour une marchandise.

7. Agencement selon la revendication 6, **caractérisé en ce que** l'application Web (WA) sur l'autre dispositif de traitement de données (C) interagit avec la base de données (DB) via l'interface de programmation d'application (API)..

8. Agencement selon l'une des revendications précédentes, **caractérisé en ce que** les moyens de lecture (SC, CA) du dispositif de traitement de données (M1, M2) sont :
- un scanner, notamment un scanner infrarouge (SC), ou
- une caméra optique (CA) du dispositif de traitement de données (M2) en liaison avec un logiciel d'analyse d'images exécuté sur le dispositif de traitement de données (M2).

9. Agencement selon la revendication 1, **caractérisé en ce que** la distinction entre le réseau local (L) et le réseau non local (N) est basée sur une adresse IP.

10. Agencement selon l'une des revendications précédentes, **caractérisé en ce que**, lors du traitement d'une liste de marchandises (KL) lors du préparation, l'affichage des marchandises encore à prélever sur l'appareil portable de traitement de données (M1, M2) a lieu en de telle sorte qu'un type de marchandise ne soit plus affiché dès que le nombre de ce type de marchandise encore à prélever atteint la valeur '0'.

11. Agencement selon l'une des revendications précédentes, **caractérisé en ce qu'**une détection de conteneurs de marchandises comprenant plusieurs marchandises d'un ou de différents types de marchandises est possible, chaque conteneur de marchandises se voyant attribuer un identifiant de conteneur unique, qui est appliqué à un conteneur marquage, le marquage du récipient étant appliqué sur un emballage du récipient, et se présentant notamment sous la forme d'une étiquette lisible optiquement, de préférence sous forme codée.
